# EUROPEAN PATENT SPECIFICATION

(11) **EP 2 650 122 B1**
(45) Date of publication and mention of the grant of the patent: **04.06.2014**
(21) Application number: 12006428.2
(22) Date of filing: 13.09.2012
(51) Int. Cl.: B32B 15/08, B32B 15/20, E04F 13/02, E04F 15/12

(54) **Product for coating structures and objects and production process thereof**
Produkt zum Beschichten von Strukturen und Objekten, und Produktionsprozess davon
Produit de revêtement de structures et d'objets et son procédé de production

(30) Priority: 11.04.2012 IT MI20120576
(43) Date of publication of application: 16.10.2013
(73) Proprietor: AOR S.r.l., 25030 Adro (BS) (IT)
(72) Inventor: Bertoli, Emanuele, 25030 Adro (BS) (IT)
(74) Representative: Lecce, Giovanni

(56) References cited:
- EP-A1- 1 935 635

## Description

The present invention relates to a product for coating structures and objects and production process thereof.

More specifically, the present invention relates to a product for coating and to the production process thereof particularly used for the coating or as a component part of walls and floors of both interiors and exteriors and for coating objects of any kind, shape and size, such as suitcases, motorcycle and motor scooter fairings, coatings of interior and exterior elements of motor cars, aircraft and pleasure craft, furnishings, covers for cell phones and computers, glasses etc for the purpose of improving the aesthetic appearance. Generally speaking, tiles or panels of various shapes and materials such as ceramic or other known materials are used for the coating of walls and floors of interiors and/or exteriors; such tiles and panels, in addition, may be of different colours or have different patterns and finishes depending on market demand and aesthetic and design concepts.

Equally, objects and structures of different types such as, for example, the suitcases, motorcycle fairings or parts of motor cars, aircraft and pleasure craft, furnishings and the like, may have coatings and/or inserts in different materials so as to give said object and/or structure a more prestigious appearance.

The drawbacks of the coatings and/or inserts mentioned above are linked mainly to aesthetic (type of decorations, shapes, etc) and construction -application type factors; in fact, the application of rigid coatings to curved or tendentially not entirely flat surfaces entails problems linked as much to the shaping process of the coating as to the application process thereof to the surface to be coated.

The purpose of the present invention is to provide a product for coating structures and objects and production process thereof which overcomes the aforesaid drawbacks of the prior art.

These and further purposes are achieved by the product for coating according to the invention and to the production process thereof, with said product which comprises a plurality of integral layers for defining a single mouldable body for the coating needs and defined by a lower or base layer made either of an aluminium sheet or its alloys, or by an aluminium alveolar piece or its alloys, an intermediate layer made of one or more layers of adhesive or transfer material, an upper layer comprising a plurality of scales or mother-of-peal wires coated with a layer of catalysed and diluted insulating material applied by means of a spraying process, a stucco or paint layer applied by means of a grouting process and one or more paint layers applied by a glazing process and suitable for giving a glossy or semi-gloss finish and colours or combinations of different colours.

The technical and functional characteristics of the product for coating structures and objects according to the invention and production process thereof will be more clearly comprehensible from the detailed description below in which reference is made to a preferred and non-limiting embodiment of the aforesaid product and of the process as schematised in the appended drawings wherein:
figure 1 schematically represents a view from above of a plant, according to a preferred and non-limiting configuration, for performing the process according to the invention;
figure 2 schematically represents an axonometric and cross-section view of a product for coating structures and objects of all kinds obtained by means of the process according to the invention.

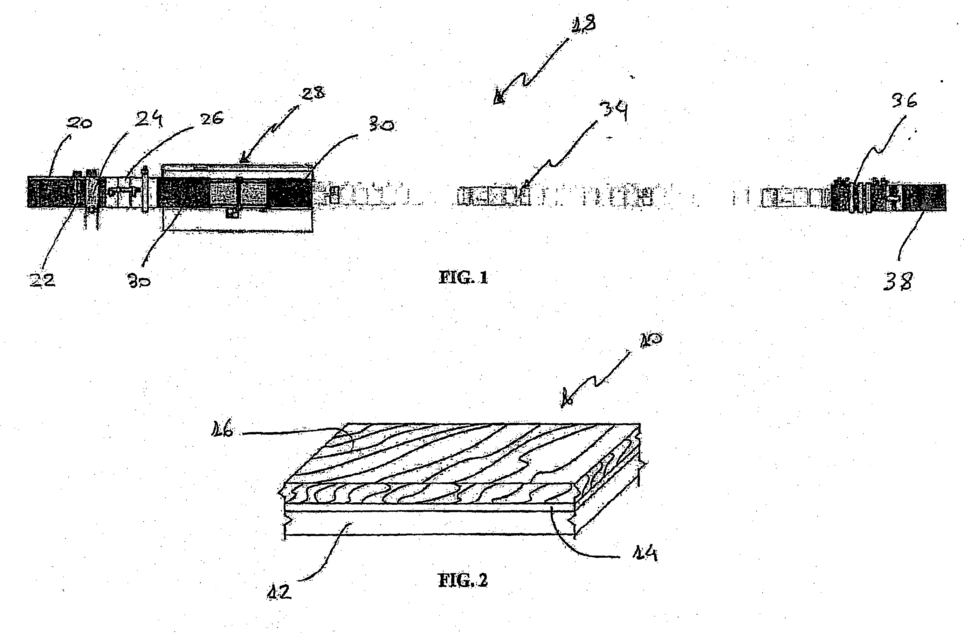

With reference to the aforesaid figures, the product obtained by the process described in detail below, globally denoted by reference numeral 10 in figure 2, is defined by a sheet comprising a plurality of layers laid on top of one another to form a single assembly which can be processed as described in detail below.

The product for coating 10 basically comprises, a lower layer 12 constituting the base layer defined by an aluminium sheet or its alloys with a thickness tendentially ranging from 1 to 2mm or by an aluminium alveolar piece or its alloys of a thickness ranging from 4 to 30mm, an intermediate layer 14 composed of one or more layers of adhesive material (defined by the technical name of "transfer"), and an upper layer 16 defined by a layer of adequate thickness (tendentially 0.1 to 0.5mm) comprising a plurality of scales or mother-of-pearl wires obtained, by known processes, from shells of various kinds and glued to each other by means of micro-gluing so as to obtain the aforesaid layer with adequate resistance for the various applications.

Said upper layer 16 is, in turn, coated with a layer of catalysed and diluted insulating material applied by means of a spraying process, a stucco or paint layer applied by means of a grouting process, one or more paint layers applied by a glazing process and suitable for giving a glossy or semi-gloss finish and colours or combinations of different colours; said layers are applied by means of a process which will be described below.

The product for coating described above may be flat or have non-planar curved or profiled surfaces depending on the specific requirements of the coating.

The production process of the product for coating 10,according to a preferred embodiment on the basis of which the product mentioned has a flat extension, is made using, as schematised in figure 1, a linear plant 18.

Said plant comprises an input conveyor belt 20 which the lower or base layer in aluminium 12 is placed on, above which the intermediate layer 14 defined by the transfer and the upper layer 16 of mother-of-pearl material are applied; the intermediate layer 14, more specifically, is defined by one or more layers of adhesive transfer material such as to enable its stabilisation in relation to the base layer 12 and upper layer 16.

The intermediate layer 14 and the upper layer 16 are applied manually to the base layer 12 and such first step of the process is particularly critical in that any air bubbles which may have formed between the intermediate layer and the upper layer must be eliminated; in an alternative process the application of such intermediate and upper layers is performed automatically.

The multilayer or sheet thus obtained and loaded on the input conveyor belt 20, crosses a brushing-dusting section 22 comprising at least one pair of brushes (upper and lower) and a least two blower hoods (one upper and one lower) so as to eliminate any residues of dust and similar impurities which may deposit on the multilayer sheet during the assembly step thereof.

The brushed and dusted sheet is subsequently subjected to a spraying step and at least one subsequent step of grouting in a machine 24.

During the spraying step a layer of catalysed and diluted insulating material (preferably the insulating material is catalysed to 50%and diluted to 150% with a solvent) is applied by spraying to the upper layer 16; subsequently the sheet 10 is subjected to a pre-drying step for a period of not less than thirty minutes at a temperature generally speaking equal to 120°C.

The spraying step is followed by at least one grouting step, also performed in the machine 24, by means of rollers at independent speeds and suitable for permitting the application of a layer of stucco or thicker paint than usual suitable for filling and levelling any gaps or spaces of the upper layer 16 of the sheet 10.

The spraying and grouting step has the function of making the technical-functional characteristics coherent with those of the main components/basic constituents of the sheet and facilitate the production process thereof.

The sheet subsequently passes through a drying tunnel 26 inside which the drying step takes place by means of hot air blowers, a plurality of infrared lamps and at least one UV lamp.

Once the drying step is over, the sheet passes through a pressurised cabin 28, fitted with a pair of conveyor belts 30 and a glazing machine 32 in an intermediate position and in line with said pair of conveyor belts.

The glazing machine 32 has the function of applying one or more layers of paint to the upper layer 16 of the sheet 10 (previously brushed, sprayed, grouted and dried) in a uniform manner; such glazing step has the function of giving the sheet and, specifically, the upper layer 16 in mother-of-pearl material, a gloss or semi-gloss finish and colours or combinations of different colours in line with the specific needs of the object or structure, wall or floor to which the product for coating 10 is applied.

The pressurised cabin 28, moreover, performs the important function of eliminating all the extraneous particles such as dust or shavings which tend to adhere to the paint deposited on the sheet.

The sheet coming out of the pressurised cabin 28 passes through an evaporation and pre-gelling furnace 34 having the function of heating the paint deposited on the sheet so as to start the hardening step prior to the subsequent step of passing through a UV furnace 36 during the course of which the paint is dried completely and the sheet acquires the characteristics of the finished product, that is of the product for coating 10 which, by means of an outgoing conveyor belt, is sent for storage.

The sheets leaving the plant 18 may be subjected to one or more cutting operations (with water, laser or the like), performed at the end of the process, so as to obtain for example square or rectangular tiles or of different other shapes ( circular, mixed, design, insert etc) for the coating of flat surfaces; depending on specific production requirements, the cutting operations may also be performed prior to the process described herein in detail and, in particular, before the brushing-dusting step.

The same multilayer product 10, described above with reference to its constituent characteristics and its production process relative to a preferred embodiment configuration defined by a flat plane, may also be used to coat surfaces and objects with a curved, complex and not necessarily flat outline.

In the case in which the product for coating 10 is to be applied to non-flat or not completely flat surfaces such as those of the suitcases or motorcycle fairings or other complex shaped surfaces, the multilayer composed of the lower layer 12 in aluminium or its alloys, of the intermediate layer 14 in adhesive transfer material and of the upper layer 16 in mother-of-pearl material, must be shaped beforehand according to the geometric characteristics of the surfaces to be coated and subsequently subjected to the treatments of brushing/dusting, spraying, grouting, glazing etc. performed on machines similar to those described above, but fitted with different implements; such process of preventive shaping or preparation of the multilayer consists preferably of a hot or cold moulding, thermoforming or thermo-bending operation.

As may be seen from the above, the advantages which the invention achieves are evident.

The lower or base layer 12 of the sheet 10, being made in aluminium or its alloys, advantageously makes it possible to perform cutting, moulding, thermoforming operations and the like of the sheet 10 subjected to the production process described above by way of example; in that, the material constituting the lower layer 12 has a thermic delta and dilation coefficient very close to that of the mother-of-pearl constituting the upper layer 16 and as a result of this, eliminates any problems related to dilation following sudden temperature changes which may occur during moulding, thermoforming, heating in the furnace after glazing and/or any unfortunate dilation related to exposure in climatic or microclimatic environments with significant temperature changes such as swimming pool surrounds, power stations, external environments, motor vehicles etc.

A further advantage is represented by the fact that the process as above makes it possible to obtain a product which can be easily and fully shaped, moulded and thermoformed, resistant to thermal shock and fire-resistant.

The fact that the product obtained by the process described is entirely eco-sustainable, in line with current market requirements, is of further advantage.

The fact that the production process described above makes it possible to optimise production and obtain improved production processes in terms of speed and uniformity compare to traditional processes, is of further advantage; this bringing consequent further advantages related to the reduced production costs and optimised production quality.

A further advantage is represented by the fact that the product for coating is made using an entirely industrialised, semi-automated or automated process such as to also enable the production of large size sheets.

Despite the invention having been described above with particular reference to the sequence of steps given solely by way of a non-limiting example, numerous modifications and variants will appear evident to a person skilled in the art in the light of the above description. The present invention therefore sets out to embrace all the modifications and variants which fall within the sphere and scope of the following claims.

## Claims

1. A product for coating (10), particularly used for coating walls and floors of both interiors and exteriors and for coating objects of any kind, shape and size as suitcases, motorcycle fairings, aircraft internal coating, interiors and exteriors of pleasure crafts or motor cars, scooters, furnishings, tools of any kind, accessories, cell phones and similar, **characterized in that** it comprises a plurality of mutually integral layers, for defining a single mouldable body for the coating needs, which are defined by a lower or base layer (12) made either of an aluminium sheet or its alloys, or by an aluminium alveolar piece or its alloys, an intermediate layer (14) made of one or more adhesive layers or transfers, an upper layer (16) comprising a plurality of scales or mother-of-pearl wires and coated with a layer of insulating material, which is catalyzed and diluted, and applied by means of a spraying process, a stucco or paint layer applied by means of a grouting process and with one or more paint layers applied by a glazing process and suitable for giving a glossy or semi-gloss, and colours or combinations of different colours.

2. The product for coating according to claim 1, **characterized in that** the lower or base layer (12), made of an aluminium sheet or its alloys, has a thickness between 1 and 2 mm.

3. The product for coating according to claim 1, **characterized in that** the lower or base layer, made of an aluminium alveolar or its alloys, has a thickness between 4 and 30 mm.

4. The product for coating according to one or more preceding claims, **characterized in that** it has a planar sheet-shaped development or non-planar curved and/or profiled surfaces.

5. The product for coating according to one or more preceding claims, **characterized in that** the surface of the upper layer (16) is brushed, treated with a insulating means and a stucco and is painted with a glossy or semi-glossy and with colours or combinations of different colours.

6. A process for making the product for coating according to one or more preceding claims, **characterized in that** it comprises a sequence of steps:
- assembly of a multilayer, defined by a lower layer (12), an intermediate layer (14) and by an upper layer (16);
- brushing-dusting of the upper layer (16) of the multilayer, in order to eliminate possible dust residues and similar impurities which can be deposited on the multilayer sheet, during the assembly step of the same;
- spraying of a layer of insulating material on the upper surface of the sheet;
- pre-drying of the sheet;
- one or more grouting steps for applying a stucco layer on the upper surface of the sheet, suitable to fill up and level possible gaps;
- drying of the so shaped sheet;
- painting of the upper surface of the sheet with a glossy or semi-glossy finish;
- heating of the sheet, for hardening and drying the paint.

7. The process according to claim 6, **characterized in that** the assembly of the multilayer is made by manual or automatic deposition on the lower layer (12), of the intermediate layer (14) and upper layer (16).

8. The process according to claim 6, **characterized in that** it comprises a possible shaping or preparation step of the multilayer before brushing, and made by hot-or cold moulding, thermoforming or thermo-bending.

9. The process according to claim 6, **characterized in that** it comprises one or more water, laser or similar cutting operations, made before the brushing and dusting step or after the heating step for hardening and drying the paint.

## Patentansprüche

1. Beschichtungsprodukt (10), das insbesondere zur Beschichtung von Innen- und Außenwänden und -böden und zur Beschichtung von Gegenständen jeglicher Art, Form und Größe eingesetzt wird, wie Reisekoffer, Motorradverkleidungen, Flugzeug-Innenbeschichtung, Innen- und Außenseiten von Vergnügungsbooten oder Personenkraftwagen, Roller, Einrichtungsgegenstände, Werkzeug jeglicher Art, Zubehör, Mobiltelefone und dergleichen, **dadurch gekennzeichnet, dass** das Produkt eine Anzahl von gegenseitig miteinander verbundenen Schichten zum Definieren eines einzelnen formbaren Körpers für die Forderungen der Beschichtung umfasst, welche Schichten definiert sind durch eine untere oder Basisschicht (12), die entweder aus einem Blech aus Aluminium oder dessen Legierungen oder aus einem wabenförmigen Stück aus Aluminium oder dessen Legierungen hergestellt ist, eine Zwischenschicht (14) aus einer oder mehrerer Klebeschichten oder Übergangslagen, eine obere Schicht (16), die eine Anzahl von Schuppen oder Perlmuttdrähten aufweist und mit einer Schicht aus isolierendem Material beschichtet ist, die katalysiert und verdünnt und durch ein Sprühverfahren aufgebracht ist, eine Stuck- oder Lackschicht, die durch ein Spachtelverfahren aufgebracht ist und eine oder mehrere Lackschichten aufweist, die durch ein Verglasungsverfahren aufgebracht und dafür geeignet ist oder sind, eine Glanz- oder Seidenglanzbeschichtung zu ergeben, und Farben oder Kombinationen von verschiedenen Farben.

2. Beschichtungsprodukt nach Anspruch 1, **dadurch gekennzeichnet, dass** die untere oder Basisschicht (12) aus einem Blech aus Aluminium oder dessen Legierungen eine Dicke zwischen 1 und 2 mm aufweist.

3. Beschichtungsprodukt nach Anspruch 1, **dadurch gekennzeichnet, dass** die untere oder Basisschicht aus einer Wabe aus Aluminium oder dessen Legierungen eine Dicke zwischen 4 und 30 mm aufweist.

4. Beschichtungsprodukt nach einem oder mehrerer der vorhergehenden Ansprüche, **dadurch gekennzeichnet, dass** es eine ebene blattförmige Erstreckung oder nicht-planare gekrümmte und / oder profilierte Oberflächen aufweist.

5. Beschichtungsprodukt nach einem oder mehrerer der vorhergehenden Ansprüche, **dadurch gekennzeichnet, dass** die Oberfläche der oberen Schicht (16) gebürstet, mit einem Isoliermiftel und Stuck behandelt und mit einer glänzenden oder seidenglänzenden Lackierung und mit Farben oder Kombinationen von verschiedenen Farben lackiert ist.

6. Verfahren zur Herstellung des Beschichtungsproduktes nach einem oder mehrerer der vorhergehenden Ansprüche, **dadurch gekennzeichnet, dass** dieses eine Reihe von Schritten umfasst:
- Aufbauen einer Multischicht, die durch eine untere Schicht (12), eine Zwischenschicht (14) und durch eine obere Schicht (16) definiert ist;
- Bürsten-Abstauben der oberen Schicht (16) der Multischicht, um eventuelle Staubreste und ähnliche Verunreinigungen zu beseitigen, die während des Schritts des Aufbauens der Multischicht auf der Multischichtbahn abgesetzt werden können;
- Aufsprühen einer Schicht aus isolierendem Material auf der oberen Oberfläche der Bahn;
- Vortrocknen der Bahn;
- Einen oder mehrere Schritte des Spachtelns zum Aufbringen einer Stuckschicht auf der oberen Oberfläche der Bahn, geeignet zum Auffüllen und Ausgleichen von möglichen Lücken;
- Trocknen der so geformten Bahn;
- Lackieren der Oberseite der Bahn mit einer glänzenden oder seidenglänzenden Oberflächenbehandlung;
- Erhitzen der Bahn zum Härten und Trocknen der Farbe.

7. Verfahren nach Anspruch 6, **dadurch gekennzeichnet, dass** das Aufbauen der Multischicht durch manuelle oder automatische Abscheidung der Zwischenschicht (14) und der oberen Schicht (16) an der unteren Schicht (12) hergestellt ist.

8. Verfahren nach Anspruch 6, **dadurch gekennzeichnet, dass** dieses vor dem Schritt des Bürstens eine eventuelle Formgebungs- oder Vorbereitungsschritt der Multischicht umfasst, der Warm- oder Kaltspritzgießen, Thermoformen oder Thermobiegen umfasst.

9. Verfahren nach Anspruch 6, **dadurch gekennzeichnet, dass** dieses vor dem Schritt des Bürstens und Abstaubens oder nach dem Schritt des Erwärmens zum Härten und Trocknen der Farbe einen Wasser-, Laser- oder ähnlichen Schneidvorgang oder mehrere solcher Schneidvorgänge umfasst.

## Revendications

1. Produit de revêtement (10), utilisé en particulier pour le revêtement des murs et des sols à la fois des intérieurs et des extérieurs et pour le revêtement d'objets de toute sorte, forme et taille comme des valises, des carénages de motocyclette, le revêtement interne des avions, les intérieurs et les extérieurs des embarcations de plaisance ou d'automobiles, de scooters, de mobiliers, d'outils de toute sorte, accessoires, téléphones cellulaires et autres, **caractérisé en ce qu'**il comprend une pluralité de couches mutuellement solidaires, pour définir un simple corps moulable pour répondre aux besoins de revêtement, qui sont définies par une couche inférieure ou couche de base (12) constituée d'une feuille aluminium ou de ses alliages, ou d'une pièce alvéolaire aluminium ou ses alliages, d'une couche intermédiaire (14) constituée d'une ou plusieurs couches adhésives ou d'un ou plusieurs transferts, d'une couche supérieure (16) comprenant une pluralité d'écailles ou de fils de nacre et revêtue d'une couche de matériau isolant, que l'on catalyse et dilue, avant de l'appliquer à l'aide d'un procédé de pulvérisation, d'une couche de stuc ou de peinture appliquée à l'aide d'un procédé de scellement et d'une ou plusieurs couches de peinture appliquées à l' aide d' un procédé de glaçage et idéal pour donner un aspect brillant ou semi-brillant, avec des couleurs ou des combinaisons de différentes couleurs.

2. Procédé de revêtement selon la revendication 1, **caractérisé en ce que** la couche inférieure ou couche de base (12), constituée d'une feuille aluminium ou de ses alliages, a une épaisse comprise entre 1 et 2 mm.

3. Procédé de revêtement selon la revendication 1, **caractérisé en ce que** la couche inférieure ou couche de base, constituée d'un alvéolaire aluminium ou de ses alliages, a une épaisseur comprise entre 4 et 30 mm.

4. Procédé de revêtement selon une ou plusieurs revendications précédentes, **caractérisé en ce qu'**il présente un développement plan en forme de feuille ou des surfaces non planes incurvées et/ou profilées.

5. Procédé de revêtement selon une ou plusieurs revendications précédentes, **caractérisé en ce que** la surface de la couche supérieure (16) est brossée, traitée avec un produit isolant et un stuc, avant d'être recouverte d'une couche brillante ou semi-brillante, et avec des couleurs ou des combinaisons de différentes couleurs.

6. Procédé de fabrication du produit de revêtement selon une ou plusieurs revendications précédentes, **caractérisé en ce qu'**il comprend la séquence de phases suivantes :
- assemblage d'une multicouche, défini par une couche intermédiaire (12), une couche intermédiaire (14) et une couche supérieure (16);
- brossage époussetage de la couche supérieure (16) de la multicouche, pour éliminer les résidus de poussière éventuels et impuretés similaires risquant de se déposer sur la feuille multicouche, pendant la phase d'assemblage correspondante;
- pulvérisation d'une couche de matériau isolant à la surface supérieure de la feuille;
- pré-séchage de la feuille;
- une ou plusieurs phases de scellement permettant d'appliquer une couche de stuc à la surface supérieure de la feuille, afin de combler et de niveler les interstices éventuels;
- séchage de la feuille ainsi conformée;
- peinture de la surface supérieure de la feuille avec une finition brillante ou semi-brillante;
- chauffage de la feuille, pour durcir et sécher la penture.

7. Procédé selon la revendication 6, **caractérisé en ce que** l'assemblage de la multicouche est réalisé par le dépôt manuel ou automatique de la couche inférieure (12) de la couche intermédiaire (14) et de la couche supérieure (16).

8. Procédé selon la revendication 6, **caractérisé en ce qu'**il comprend une phase éventuelle de façonnage ou de préparation de la multicouche avant brossage, que l'on obtient par moulage à chaud ou à froid, thermoformage ou thermopliage.

9. Procédé selon la revendication 6, **caractérisé en ce qu'**il comprend une ou plusieurs opérations de découpe au jet d'eau, au laser ou similaire, réalisées avant la phase de brossage et d'époussetage et après la phase de chauffage pour durcir et sécher la peinture.
